# EUROPÄISCHE PATENTSCHRIFT

(11) **EP 0 589 014 B1**
(45) Veröffentlichungstag und Bekanntmachung des Hinweises auf die Patenterteilung: **29.11.1995**
(21) Anmeldenummer: 93907801.0
(22) Anmeldetag: 08.04.1993
(51) Int. Cl.: A47J 36/06

(54) **KOCHTOPFDECKEL**
COOKING-PAN LID
COUVERCLE DE CASSEROLE

(30) Priorität: 10.04.1992 DE 9205199 U
(43) Veröffentlichungstag der Anmeldung: 30.03.1994
(73) Patentinhaber: SILIT-WERKE GMBH & CO. KG, D-88493 Riedlingen (Württ.) (DE)
(72) Erfinder: FINGERLE, Hans, D-7940 Riedlingen (DE); WEIGAND, Horst, D-7943 Ertingen (DE)
(74) Vertreter: Goddar, Heinz J., Dr.
(86) Internationale Anmeldenummer: DE9300336
(87) Internationale Veröffentlichungsnummer: WO9320738

(56) Entgegenhaltungen:
- CH-A- 218 866
- DE-C- 334 123

## Beschreibung

Die Erfindung betrifft einen Kochtopf-Deckel.

Die bekannten Deckel für Kochtöpfe sind konkav, also von dem Topf weg, gewölbt. Regelmäßig weisen sie weiter eine ringförmige Prägung auf, dessen Ringdurchmesser geringfügig kleiner als der Durchmesser des Topfrandes ist.

Bei den bekannten Deckein ist das Abgießen von Flüssigkeit durch leichtes Verschieben des Deckels auf dem Topfrand unter Ausbilden eines sichelförmigen Spaltes und Schrägstellen des Topfes über einem Ausguß schwierig, weil sich auch an der dem Spalt gegenüberliegenden Seite eine Spaltöffnung bildet, aus der Dampf austritt. Um sich vor einer Verbrühung zu schützen, muß sich der Benutzer am den Armen sowie durch die Verwendung von Topflappen an den Händen schützen, wie es zum Beispiel bei dem Sockel gemäß der CH-A-218 866 der Fall ist.

Der Erfindung liegt die Aufgabe zugrunde, einen Topfdeckel zu schaffen, der ein einfacheres Abgießen erlaubt.

Erfindungsgemäß wird diese Aufgabe dadurch gelöst, daß die Deckelfläche durch einen als Zone eines gedachten, zu dem Topf hin weisenden Kugelabschnitts ausgebildeten Deckelring und einer auf dem Deckelring ruhenden kreisrunden Deckelfläche gebildet wird, wobei die Breite des Deckelrings in einem Bereich von einem bis wenigen cm liegt und der mittlere Ringdurchmesser des Deckelrings etwa dem Durchmesser des Topfes entspricht.

Dabei wird vorgeschlagen, daß der Deckelring mit einer diesen nach innen begrenzenden, zur Aufnahme der Deckelfläche dienenden, von dem Topf wegweisendoffenen, umlaufenden Ringprägung versehen ist.

Ein bevorzugtes Ausführungsbeispiel zeichnet sich dadurch aus, daß die Deckelfläche als ein Sichtglas ausgebildet ist, das besonders bevorzugt die Form eines von dem Topf weg weisenden Kugelabschnitts hat.

Die Deckelfläche kann von einer in die Ringprägung eingebrachten Kleberraupe gehalten werden.

Ein bevorzugtes Ausführungsbeispiel zeichnet sich dadurch aus, daß der Deckelgriff aus zwei einander gegenüberliegend auf der dem Topf abgewandten Seite des Deckelrings auf diesen aufgesetzten Griffstücken und wenigstens einem diese miteinander verbindenden, sich über das Sichtglas hinweg erstreckenden Griffbügel besteht.

Es wird weiter vorgeschlagen, daß zwei mit Abstand voneinander angeordnete Griffbügel vorgesehen sind. Der eine oder die beiden Griffbügel verlaufen vorzugsweise mit einem dem Krümmungsradius des Sichtglases entsprechenden Radius gekrümmt.

Die Erfindung wird im folgenden anhand einer Zeichnung erläutert. Dabei zeigt:
Fig. 1 den Deckel in einer Seitenansicht, in der rechten Hälfte mittig geschnitten,
Fig. 2 eine Draufsicht auf den in Fig. 1 gezeigten Deckel,
Fig. 3 eine Seitenansicht bei gegenüber dem geschnitten dargestellten Topf verschobenen Deckel, und
Fig. 4 eine Draufsicht auf den Deckel und Topf in der in Fig. 3 dargestellten Position zueinander.

Der Deckel besteht aus einem Deckelring 10, einer auf dem Deckelring 10 ruhenden Deckelfläche 12 und einem Deckelgriff 20, 22.

Der Deckelring 10 ist in Form einer Kugelzone ausgebildet, die einen Teil eines - strichpunktiert angedeuteten - gedachten, nach unten in den Topf hinein weisenden Kugelabschnitts bildet.

Der mittlere Ringdurchmesser, also der Abstand von der gedachten Achse des Deckels und der Mitte des Deckelrings 10 entspricht etwa dem Durchmesser b des Topfes. Die Breite des Deckelrings beträgt etwa 1 bis 3 Zentimeter.

An dem zu dem Inneren des Topfes weisenden Rand ist der Deckel mit einer Ringprägung 16 versehen, die nach oben, also vom Topf weg, weisend offen ist. Der Ringaußendurchmesser der Ringprägung 16 ist mit a angebenen, der Ringprägungsinnendurchmesser mit c, der lichte Abstand zwischen der Ringprägung 16 und dem Topfrand mit d.

In die Ringprägung 16 ist eine Kleberraupe 18 eingesetzt, die die als Sichtglas ausgebildete Deckelfläche 12 trägt. Das Sichtglas 12 ist nach oben, also vom Topf weg weisend, kugelabschnittsförmig ausgebildet.

Der Deckelgriff besteht aus zwei einander gegenüberliegend auf der dem Topf abgewandten Seite des Deckelrings 10 auf diesen aufgesetzten Griffstücken 20 und zwei mit einem ein Durchgreifen erlaubenden Abstand voneinander angeordneten Griffbügel 22. Der Radius der Griffbügel 22 entspricht demjenigen des Sichtglases 12.

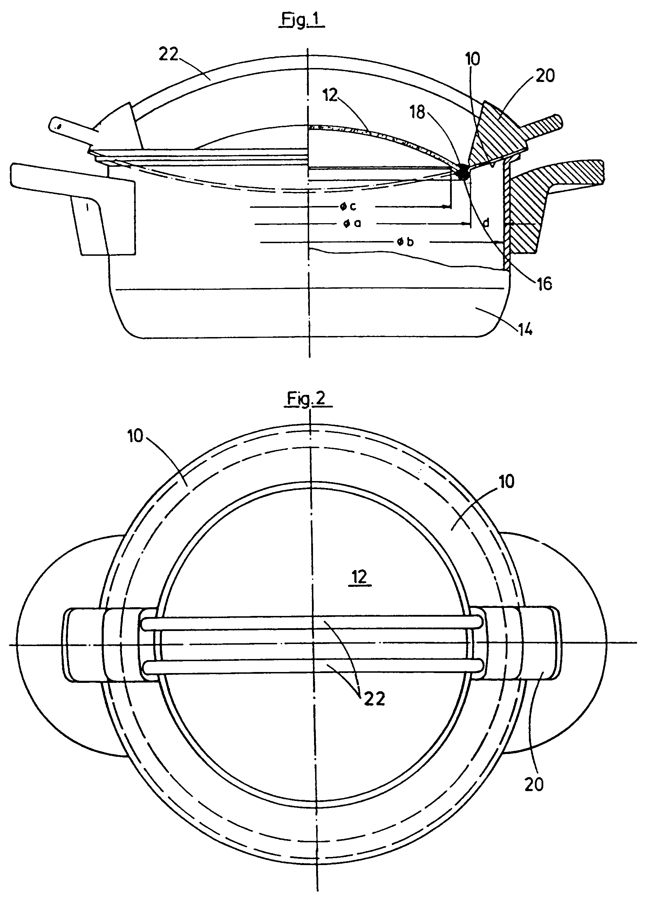

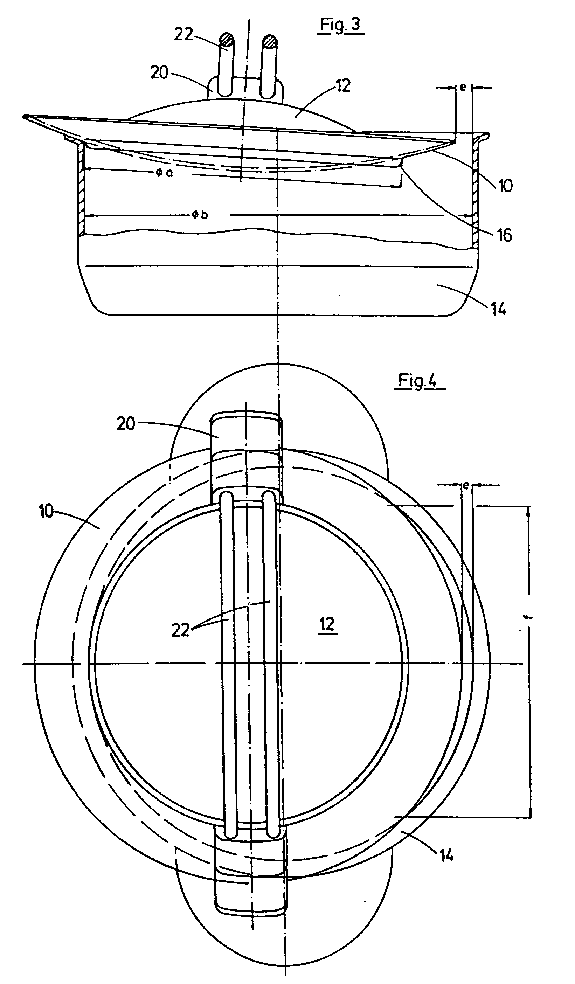

Bei dem Abgießen wird der Deckel aus der in den Figur 1 und 2 gezeigten Position in die in den Figuren 3 und 4 gezeigte Position gebracht, in der sich eine an dem einen Toprand eine sichelförmige Ausgießöffnung mit einer Länge f bildet. Die Breite e dieser Ausgießöffnung ist durch die Ringprägung 16 begrenzt, die sich an der der gebildeten Ausgießöffnung gegenüberliegenden Seite an den Rand des Topfkörpers anlegt.

Die kugelzonenförmig konvexe Ausbildung des Deckelrings 10 bewirkt dessen linienförmiges oder flächiges Aufliegen auf dem Topfrand in dem der sichelförmigen Ausgießöffnung gegenüberliegenden Bereich auch in der in den Fig. 3 und 4 gezeigten, ein Abgießen von Flüssigkeit aus dem Top erlaubenden Position. Ein Austreten von Dampf und damit die Gefahr eines Verbrühens wird vermieden.

Das in die eine Kleberraupe 18 aufnehmende Ringprägung 16 eingesetzte Sichtglas 12 erlaubt eine Beobachtung des Kochguts während des Kochvorgangs. Durch die nach oben weisend kugelabschnittsförmige Ausbildung des Sichtglases 12 läuft sich nach Kondensation absetzender Wasserdampf zu den Rändern ab, so daß das Sichtglas 12 eine Beobachtung des Kochguts bei dem Kochen und insbesondere auch bei dem Abgießen erlaubt.

Der Deckelgriff besteht aus zwei einander gegenüberliegend auf die von dem Topf weg weisenden Flächen des Deckelrings aufgesetzten Griffstücken 20 und zwei diese miteinander verbindenden, sich über das Sichtglas 12 hinweg mit einem einen Durchgriff erlaubenden Abstand von diesem erstreckenden Griffbügeln 22. Der Krümmungsradius der Griffbügel verläuft dabei etwa parallel zu dem des Sichtglases 12.

## Patentansprüche

1. Deckel für einen Kochtopf, dadurch gekennzeichnet, daß der Deckel durch einen als Zone eines gedachten, zu dem Topf hin weisenden Kugelabschnitts ausgebildeten Deckelring (10) und einer auf dem Deckelring (10) ruhenden Deckelfläche (12) gebildet wird, wobei die Breite des Deckelrings (10) in einem Bereich von einem bis wenigen cm liegt und der mittlere Ringdurchmesser des Deckelrings (10) etwa dem Innendurchmesser (b) des Topfes (14) entspricht.

2. Deckel nach Anspruch 1, dadurch gekennzeichnet, daß der Deckelring (10) mit einer diesen nach innen begrenzenden, zur Aufnahme der Deckelfläche (12) dienenden, von dem Topf weg weisend offenen, umlaufenden Ringprägung (16) versehen ist.

3. Deckel nach Anspruch 1 oder Anspruch 2, gekennzeichnet durch eine in die Ringprägung (16) eingebrachte, die Deckelfläche (12) in dieser haltenden Kleberraupe (18).

4. Deckel nach einem der vorangehenden Ansprüche, dadurch gekennzeichnet, daß die Deckelfläche als Sichtglas ausgebildet ist.

5. Deckel nach einem der vorangehenden Ansprüche, dadurch gekennzeichnet, daß die Deckelfläche (12) die Form eines von dem Topf (14) weg weisenden Kugelabschnitts hat.

6. Deckel nach einem der vorangehenden Ansprüche, dadurch gekennzeichnet, daß der Deckelgriff aus zwei einander gegenüberliegend auf der dem Topf abgewandten Seite des Deckelrings (10) auf diesen aufgesetzten Griffstücken (20) und wenigstens einem diese miteinander verbindenden, sich über die Deckelfläche (12) hinweg erstreckenden Griffbügel (22) besteht.

7. Deckel nach Anspruch 5, dadurch gekennzeichnet, daß wenigstens zwei mit Abstand voneinander angeordnete Griffbügel (22) vorgesehen sind.

8. Deckel nach Anspruch 4 in Verbindung mit Anspruch 5 oder Anspruch 6, dadurch gekennzeichnet, daß der bzw. die Griffbügel (22) mit einem ein Durchgreifen erlaubenden Abstand mit einer dessen Krümmung im wesentlichen entsprechenden Krümmung parallel zu dem Sichtglas (12) verlaufen.

## Claims

1. A lid for a cooking vessel, characterised in that the lid consists of a lid ring (10), the same being devised as a zone of an imaginary spherical cap extending towards the vessel, and of a lid surface (12) resting on the lid ring (10), the width of the lid ring (10) being in a range of from one to a few cm, the average ring diameter of the lid ring (10) corresponding approximately to the internal diameter (b) of the vessel (14).

2. A lid according to claim 1, characterised in that the lid ring (10) has a peripheral ring stamping (16) which bounds the lid ring (10) internally, is adapted to receive the lid surface (12) and is open in a direction away from the vessel (14).

3. A lid according to claim 1 or claim 2, characterised by a bead (18) of adhesive which is introduced into the annular stamping (16) and retains the lid surface (12) therein.

4. A lid according to any of the previous claims, characterised in that the lid surface takes the form of a sight glass.

5. A lid according to any of the previous claims, characterised in that the lid surface (12) has the shape of a spherical cap extending in a direction away from the vessel (14).

6. A lid according to any of the previous claims, characterised in that the lid grip comprises two grip elements (20) disposed opposite one another on that side of the lid ring (12) which is remote from the vessel, and at least one grip stirrup (22) which interconnects the grip elements (20) and extends over the lid surface (12).

7. A lid according to claim 5, characterised in that at least two spaced-apart grip stirrups (22) are provided.

8. A lid according to claim 4 in association with claim 5 or claim 6, characterised in that the or each grip stirrup (22) extends, with a spacing between them sufficient for gripping through them, parallel to the sight glass (12) with a curvature substantially corresponding to the curvature of the sight glass.

## Revendications

1. Couvercle pour une casserole, caractérisé en ce que le couvercle est formé par un anneau de couvercle (10), conçu sous la forme d'une zone d'un segment sphérique imaginaire tourné vers la casserole, et par une surface de couvercle (12) reposant sur l'anneau de couvercle (10), la largeur de l'anneau de couvercle (10) se situant dans une plage comprise entre un et quelques centimètres, et le diamètre moyen de l'anneau de couvercle (10) correspondant sensiblement au diamètre intérieur (b) de la casserole (14).

2. Couvercle selon la revendication 1, caractérisé en ce que l'anneau de couvercle (10) comporte une partie estampée annulaire périphérique (16) qui le délimite vers l'intérieur, qui sert à recevoir la surface de couvercle (12) et qui est ouverte dans une direction opposée à la casserole.

3. Couvercle selon la revendication 1 ou la revendication 2, caractérisé par un cordon d'adhésif (18) qui est logé dans la partie annulaire estampée (16) et qui y maintient la surface de couvercle (12).

4. Couvercle selon l'une des revendications précédentes, caractérisé en ce que la surface de couvercle est conçue sous la forme d'un hublot en verre.

5. Couvercle selon l'une des revendications précédentes, caractérisé en ce que la surface de couvercle (12) présente la forme d'un segment sphérique orienté à l'opposé de la casserole (14).

6. Couvercle selon l'une des revendications précédentes, caractérisé en ce que la poignée du couvercle se compose de deux éléments de poignée (20), qui sont disposés en vis-à-vis sur le côté de l'anneau de couvercle (10) opposé à la casserole et qui sont montés sur ledit anneau de couvercle, et d'au moins une anse (22) qui relie entre eux ces éléments de poignée et enjambe la surface de couvercle (12).

7. Couvercle selon la revendication 5, caractérisé en ce qu'il est prévu au moins deux anses (22) distantes l'une de l'autre.

8. Couvercle selon la revendication 4 en liaison avec la revendication 5 ou la revendication 6, caractérisé en ce que la ou les anses (22) s'étendent parallèlement au hublot en verre (12) à une distance permettant de passer la main et suivant une courbure correspondant sensiblement à celle dudit hublot en verre.
